# EUROPÄISCHE PATENTSCHRIFT

(11) **EP 4 083 939 B1**
(45) Veröffentlichungstag und Bekanntmachung des Hinweises auf die Patenterteilung: **19.08.2026**
(21) Anmeldenummer: 22165739.8
(22) Anmeldetag: 31.03.2022
(51) Int. Cl.: G06V 10/82, G06V 10/44, G06V 10/70, G06V 20/68, G06V 20/52

(54) **OBJEKTERKENNUNG FÜR EIN HAUSGERÄT**
OBJECT DETECTION FOR A DOMESTIC APPLIANCE
DÉTECTION D'OBJETS POUR UN APPAREIL ÉLECTROMÉNAGER

(30) Priorität: 27.04.2021 DE 102021204149
(43) Veröffentlichungstag der Anmeldung: 02.11.2022
(73) Patentinhaber: BSH Hausgeräte GmbH, 81739 München (DE)
(72) Erfinder: Heupel, Sven, 85579 Neubiberg (DE); Richter, Hoang, 83339 Chieming (DE); Söllner, Christoph, 81475 München (DE)

(56) Entgegenhaltungen:
- KR-B1- 102 234 771
- US-A1- 2020 088 463
- US-A1- 2021 192 329

## Beschreibung

Die Erfindung betrifft eine Objekterkennung. Insbesondere betrifft die Erfindung die Erkennung eines Objekts im Bereich eines Hausgeräts.

Ein Hausgerät umfasst eine Kamera zur Bereitstellung eines Kamerabilds. Auf dem Kamerabild ist ein vorbestimmtes Objekt im Bereich des Hausgeräts abgebildet. Mittels eines ML (Maschinelles Lernen) Systems kann das Objekt erkannt werden. Das ML-System kann insbesondere darauf trainiert sein, das Objekt auf dem Kamerabild zu erkennen.

Ist das Objekt auf dem Kamerabild in hoher Qualität dargestellt, so können hohe Erkennungsraten erzielt werden. Eine Verwechslung verschiedener Objekte miteinander kann selten und eine Nichterkennung eines Objekts kann unwahrscheinlich sein. Im täglichen Gebrauch des Hausgeräts kann das Kamerabild gelegentlich von geringerer Qualität sein, sodass eine Erkennungsleistung des ML-Systems einbrechen kann. Falsche oder nicht erfolge Erkennungen können häufig oder wahrscheinlich sein.

US 2020/088463 A1 offenbart einen Kühlschrank mit integrierter Kamera im Innenraum und einem Display an der Tür. Ein trainiertes maschinelles Lernmodell erkennt Lebensmittel in Kamerabildern, erzeugt Augmented-Reality-Objekte (z.B. Rezepte) und blendet diese über das Live-Bild. Bei Nutzereingabe liefert das Gerät kontextbezogene Antworten zu den erkannten Lebensmitteln.

US 2021/192329 A1 offenbart einen intelligenten Kühlschrank mit transparentem Display auf der Außentür und Kameras in der Tür. Befindet sich die Tür in einem vordefinierten Öffnungswinkel wird automatisch die Innenseite fotografiert. Ein maschinelles Lernmodell ermittelt den Lagerzustand der Lebensmittel und gibt auf dem Display Informationen zu den Lebensmitteln aus.

Eine der vorliegenden Erfindung zugrunde liegende Aufgabe besteht in der Bereitstellung einer verbesserten Technik zur Erkennung eines Objekts im Bereich eines Hausgeräts. Die Erfindung löst diese Aufgabe mittels der Gegenstände der unabhängigen Ansprüche. Unteransprüche geben bevorzugte Ausführungsformen wieder.

Ein erstes Ausführungsbeispiel der vorliegenden Erfindung umfasst ein Verfahren nach dem Anspruch 1.

Das Hausgerät kann in Abhängigkeit des erkannten Objekts gesteuert werden. Handelt es sich bei dem Hausgerät beispielsweise um ein autonom bewegliches Bodenbearbeitungsgerät, so kann dieses so über einen Boden gesteuert werden, dass eine Kollision mit dem Objekt vermieden wird. Das Objekt kann auch gezielt mittels des Hausgeräts bearbeitet oder genutzt werden, beispielsweise wenn es sich um eine Ladestation für das Bodenbearbeitungsgerät handelt. Eine mittels des Hausgeräts erbrachte Funktion kann durch die Objekterkennung erweitert oder verbessert werden. Umfasst das Hausgerät etwa ein Kühlgerät, so können in ihm aufbewahrte Objekte erkannt werden, um einen Lagerbestand der Objekte automatisch zu bestimmen.

Durch Nutzen der Seitenkanal-Information kann eine Erkennungsrate des ML-Systems gesteigert sein. Ein falsches Erkennen des Objekts als ein anderes Objekt oder ein mangelndes Erkennen des Objekts können deutlich seltener oder weniger wahrscheinlich sein. Das Erkennen kann mit erhöhter Sicherheit erfolgen und gegebenenfalls kann ein Detail des Objekts erkannt werden, das ohne Nutzen der Seitenkanal-Information nicht oder nicht sicher bestimmt werden kann.

In einer ersten Variante des Verfahrens, die jedoch nicht Bestandteil der vorliegenden Erfindung ist, ist die Seitenkanal-Information durch eine Bauart des Hausgeräts festgelegt. Beispielsweise können unveränderliche Eigenschaften des Kamerabilds berücksichtigt werden. Ein beispielhafter solcher Parameter betrifft einen auf dem Kamerabild sichtbaren Abschnitts des Hausgeräts. Auch können beispielsweise eine unveränderliche Perspektive der Kamera auf das Objekt oder eine maximale Größe des Objekts berücksichtigt werden. Beispielsweise kann ein Objekt in einem Kühlschrank nicht größer sein als der Innenraum des Kühlschranks. Das ML-System muss auf Objekte, die unter anderen als der Bauart des Hausgeräts entsprechenden Parametern erfasst wurden, nicht trainiert werden. Ein bereits umfassend trainiertes ML-System kann in seiner Objekterkennung auf Parameter des vorliegenden Hausgeräts eingeschränkt werden. Bezüglich der Erkennung des Objekts handelt es sich bei einem solchen Parameter um a-priori Wissen, das bei einer naiven Implementation der Objekterkennung ungenutzt bleibt.

In einer zweiten Variante, wird die Seitenkanal-Information auf der Basis eines dynamischen Parameters bestimmt, welcher der Abtastung des Kamerabilds zugrunde liegt. Der Parameter kann mittels eines Sensors erfasst oder durch eine das Kamerabild abtastenden Kamera bereitgestellt werden. Der Sensor kann Teil des Hausgeräts sein.

Die Seitenkanal-Information kann einen Ort und/oder eine Ausrichtung einer Kamera betreffen, mittels der das Kamerabild abgetastet wird. Betrifft die Seitenkanal-Information sowohl den Ort als auch die Ausrichtung, spricht man auch von einer Pose der Kamera. Die Kamera und das Objekt sind üblicherweise fest gegenüber dem Hausgerät angeordnet. Trotzdem kann eine Pose der Kamera gegenüber dem Objekt variieren, beispielsweise wenn das Hausgerät unterschiedliche Abschnitte aufweist, die gegeneinander beweglich sind. Beispielsweise kann das Hausgerät ein Kühlgerät mit einem Körper und einer Tür umfassen, wobei das Objekt in einem Innenraum des Körpers und die Kamera an der Tür angebracht ist. Ort und/oder Ausrichtung der Kamera können auf der Basis eines Öffnungsgrads oder Öffnungswinkels der Tür bestimmt werden.

Das ML-System kann einem beliebigen Ansatz des maschinellen Lernens folgen. In einer bevorzugten Ausführungsform umfasst es ein künstliches neuronales Netzwerk. Dieses kann zur Erkennung des Objekts trainiert worden sein.

In einer weiteren Ausführungsform sind mehrere ML-Systeme zur Erkennung des Objekts vorgesehen, die gleichen oder unterschiedlichen Ansätzen des maschinellen Lernens folgen können. Eines der ML-Systeme wird auf der Basis der Seitenkanal-Information ausgewählt. Die einzelnen ML-Systeme können jeweils auf die Erkennung des Objekts unter unterschiedlichen, vorbestimmten Bedingungen eingerichtet sein. Es sind auch unterschiedliche Vorverarbeitungen vorgesehen, die das Kamerabild für ein ML-System aufbereiten, beispielsweise indem eine Helligkeit oder ein Kontrast angepasst wird oder indem ein vorbestimmter, relevanter Bereich bzw. interessierender Bereich bestimmt wird, der das Objekt enthält. Eine der Vorverarbeitungen wird auf der Basis der Seitenkanal-Information ausgewählt. Eine zweistufige Auswahl erfolgt, da sich an die verschiedenen Vorverarbeitungen verschiedene ML-Systeme anschließen und sowohl die Vorverarbeitung als auch das ML-System auf der Basis der Seitenkanal-Information ausgewählt werden.

Auf der Basis der Seitenkanal-Information kann ein Abschnitt des Kamerabilds, der zur Erkennung des Objekts irrelevant ist, verworfen werden. Anders ausgedrückt bzw. anders herum gedacht kann ein interessierender Bereich bzw. eine Region of Interest (ROI) bestimmt werden, in der sich das Objekt befindet. Ferner kann der bestimmte interessierende Bereich bzw. die bestimmte Region vorbereitet werden, beispielsweise indem der interessierende Bereich ausgeschnitten und/oder bezüglich einer Kameraperspektive entzerrt wird. Andere mögliche Vorbereitungen umfassen eine Frequenzanalyse oder einen Filter. In einer besonders bevorzugten Ausführungsform sind mehrere ML-Systeme zur Erkennung des Objekts vorgesehen und eines davon wird auf der Basis der Seitenkanal-Information ausgewählt. Vorzugsweise wird innerhalb des Kamerabilds ein interessierender Bereich bestimmt, in dem sich das Objekt befindet. Das Kamerabild kann dann basierend auf dem interessierenden Bereich vorbereitet werden, bevor es dem ausgewählten ML-System zugeführt wird.

Die Seitenkanal-Information umfasst einen Kameraparameter wie eine Brennweite, eine Blende, eine Belichtungszeit und/oder eine Abtastempfindlichkeit der Kamera zum Zeitpunkt des Abtastens. Auch herrschende Lichtverhältnisse, etwa eine Lichttemperatur oder eine räumliche Lichtverteilung, können berücksichtigt werden. Das Kamerabild kann bezüglich eines solchen Parameters angepasst werden oder der Parameter kann der Erkennung des Objekts zugrunde gelegt sein.

Die Seitenkanal-Information kann eine relative Bewegung der Kamera, mittels der das Kamerabild abgetastet wird, gegenüber dem Objekt umfassen. Insbesondere unter Berücksichtigung eines Kameraparameters können beispielsweise eine Bewegungsunschärfe, eine Über- oder Unterbelichtung oder ein anderer Abbildungsfehler erkannt, berücksichtigt, kompensiert oder korrigiert werden.

Eine zweite Ausführungsform der vorliegenden Erfindung umfasst eine Vorrichtung nach Anspruch 7.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Insbesondere sind mehrere ML-Systeme zur Erkennung des Objekts vorgesehen.

Die Verarbeitungseinrichtung ist dann dazu eingerichtet, eines der ML-Systeme auf der Basis der Seitenkanal-Information auszuwählen. Die Verarbeitungseinrichtung kann dazu eingerichtet sein, einen interessierenden Bereich innerhalb des Kamerabilds zu bestimmen, in dem sich das Objekt befindet. Besonders bevorzugt ist dann die Verarbeitungseinrichtung dazu eingerichtet, das Kamerabild basierend auf dem interessierenden Bereich vorzubereiten, bevor es dem ausgewählten ML-System zugeführt wird.

Die Vorrichtung kann mit dem Hausgerät integriert ausgeführt sein. Nach einem weiteren Aspekt der Erfindung umfasst ein Hausgerät eine hierin beschriebene Vorrichtung.

Das Hausgerät kann eine Tür aufweisen, an der die Kamera angebracht ist, wobei die Kamera dazu eingerichtet ist, das Kamerabild bei geöffneter Tür abzutasten. Insbesondere kann das Kamerabild abgetastet werden, während die Tür gegenüber dem restlichen Hausgerät bewegt wird. Das Objekt kann am oder im Hausgerät angeordnet oder aufgenommen sein. In einer bevorzugten Ausführungsform umfasst das Hausgerät ein Kühlgerät mit einem kühlbaren Innenraum zur Aufnahme des Objekts.

Die Erfindung wird nun unter Bezug auf die beiliegenden Figuren genauer beschrieben, in denen:
- Figur 1: ein Hausgerät mit einer Vorrichtung zur Erkennung eines Objekts; und
- Figur 2: ein Ablaufdiagramm eines Verfahrens zur Erkennung eines Objekts
darstellt.

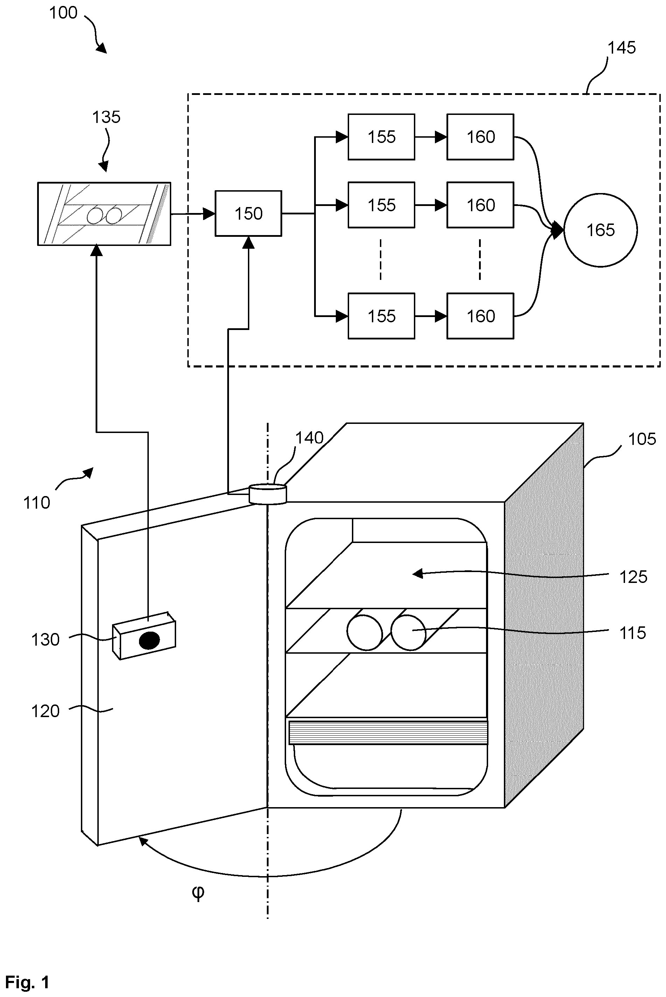

Figur 1 zeigt ein System 100 mit einem Hausgerät 105 mit einer Vorrichtung 110 zur Erkennung eines Objekts 115. Rein beispielhaft ist das Hausgerät 105 als Kühlgerät ausgeführt und es umfasst eine Tür 120 zur Verschließung eines Innenraums 125, in dem das Objekt 115 in der beispielhaften Form einer Flasche aufgenommen ist.

Die Vorrichtung 110 umfasst vorliegende eine Kamera 130 zur Bereitstellung eines Kamerabilds 135, einen Drehwinkelsensor 140 zur Bestimmung eines Öffnungswinkels φ der Tür 120 des Kühlgeräts 105, und eine Verarbeitungseinrichtung 145. Die Kamera 130 ist an der Tür 120 angebracht, sodass ihre Position und Ausrichtung bezüglich dem Objekt 115 von einem Öffnungswinkel φ der Tür 120 abhängig ist.

Der mittels des Drehwinkelsensors 140 bestimmbare Öffnungswinkel φ stellt eine Seitenkanal-Information des Kamerabilds 135 dar, indem es einen Umstand betrifft, unter dem das Kamerabild abgetastet wird. In anderen Ausführungsformen kann eine andere Informationsquelle zur Bestimmung einer Seitenkanal-Information vorgesehen sein, insbesondere ein Sensor. Auch die Kamera 130 kann eine solche Information bereitstellen, beispielsweise in Form eines Belichtungsparameters, der bei der Abtastung des Kamerabilds 135 verwendet wurde. In einer weiteren Ausführungsform kann ein Speicher vorgesehen sein, in dem ein unveränderlicher Parameter abgelegt ist, der als Seitenkanal-Information verwendet werden kann, beispielsweise eine Abmessung des Innenraums 125. In noch einer weiteren Ausführungsform kann ein dynamischer Parameter wie der Drehwinkel mittels einer statisch abgespeicherten Information, etwa einer Tabelle, umgesetzt werden, um eine Seitenkanal-Information zu ergeben. Beispielsweise könnte so ein Verzerrungswinkel des Kamerabilds 135 auf der Basis des Drehwinkels bestimmt werden. Insbesondere wenn das Kühlgerät 105 vorbestimmte Aufnahmen für Objekte 115 aufweist, kann auf der Basis des Verzerrungswinkels auch ein Bereich des Kamerabilds 135 bestimmt werden, in welchem sich das Objekt 115 befindet, falls es in einer korrespondierenden Aufnahme vorhanden ist.

Die Verarbeitungseinrichtung 145 kann mehrere Funktionsblöcke implementieren, von denen einige nach Art eines Flussdiagramms exemplarisch in Figur 1 dargestellt sind. Eine Komponente 150 bestimmt die Seitenkanal-Information aus einer der genannten Quellen. Die Information kann zur Vorverarbeitung des Kamerabilds 135 verwendet werden, beispielsweise indem das Kamerabild 135 entzerrt wird, seine Belichtung angepasst wird oder ein das Objekt 115 umfassender Abschnitt freigestellt wird. In einer anderen Ausführungsform kann die Seitenkanal-Information von einer nachfolgenden Komponente verwendet werden.

Das von der Komponente 150 bereitgestellte, möglicherweise bereits angepasste Kamerabild 135 kann mittels einer optionalen Vorverarbeitung 155 vorverarbeitet werden, bevor mittels einer ML-Komponente 160 das Objekt 115 erkannt wird. Die ML-Komponente 160 stellt ein Ergebnis 165 bereit, welches das erkannte Objekt 115 repräsentieren kann. In einer Ausführungsform kann das Hausgerät 105 oder ein anderes Hausgerät 105 in Abhängigkeit des Ergebnisses 165 gesteuert werden. Im vorliegenden Beispiel könnte etwa ein Inventarsystem von einem erkannten Objekt 115 informiert werden oder eine Temperatur im Innenraum 125 des Kühlgeräts 105 könnte an das erkannte Objekt 115 angepasst werden.

Vorliegend sind beispielhaft mehrere Vorverarbeitungen 155 vorgesehen und die Komponente 150 ist dazu eingerichtet, auf der Basis der Seitenkanal-Information eine der Vorverarbeitungen 155 auszuwählen, mittels der das Kamerabild 135 vorverarbeitet wird. Jeder Vorverarbeitung 155 kann ein dediziertes ML-System 160 zugeordnet sein oder nur ein ML-System 160 ist für mehrere Vorverarbeitungen 155 vorgesehen. Es können auch mehrere ML-Systeme 160 vorgesehen sein, von denen eines auf der Basis der Seitenkanal-Information zur Erkennung des Objekts 115 ausgewählt werden kann. Diese Auswahl kann unabhängig von der Auswahl einer der Vorverarbeitungen 155 sein. Eine Erkennung des Objekts 115 erfolgt üblicherweise nur mittels eines der ML-Systeme 160, sodass nur dieses ML-System 160 das Ergebnis 165 bereitstellt.

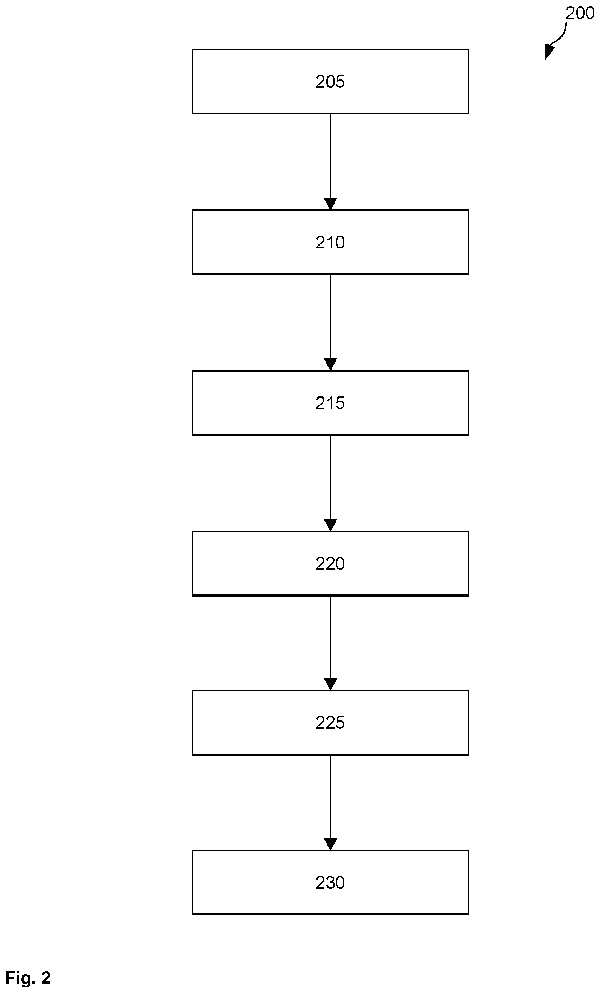

Figur 2 zeigt ein Ablaufdiagramm eines Verfahrens 200 zum Erkennen eines Objekts 115. Das Verfahren 200 kann bevorzugt teilweise oder vollständig mittels einer Vorrichtung 110 ausgeführt werden. In einem Schritt 205 wird mittels der Kamera 130 ein Kamerabild 135 abgetastet, welches das Objekt 115 zumindest abschnittsweise darstellt. Das Kamerabild 135 kann unter vorbestimmten oder zu bestimmenden Bedingungen abgetastet werden. Beispielsweise kann ein Abtasten erfolgen, wenn die Tür 125 geöffnet wird, der Öffnungswinkel φ in einem vorbestimmten Bereich liegt und gleichzeitig eine Öffnungsgeschwindigkeit unter einem vorbestimmten Schwellenwert liegt. Zum Zeitpunkt des Abtastens können Lichtverhältnisse bestimmt oder vorbestimmte Lichtverhältnisse herbeigeführt werden, beispielsweise mittels einer Beleuchtungseinrichtung oder eines Blitzlichts. In Abhängigkeit des Öffnungswinkels φ kann eine Brennweite der Kamera 130 bestimmt und eingestellt werden, in Abhängigkeit der Öffnungsgeschwindigkeit können eine Blende, eine Belichtungszeit und/oder eine Abtastempfindlichkeit der Kamera 130 gewählt und eingestellt werden. Eine Ausrichtung der Kamera 130 kann ebenfalls gesteuert werden, beispielsweise in Abhängigkeit eines auf dem Kamerabild 135 abzubildenden Abschnitts des Innenraums 125.

In einem Schritt 210 kann eine Seitenkanal-Information bestimmt werden, die einen Umstand betrifft, unter dem das Kamerabild 135 abgetastet wird oder wurde. Die Seitenkanal-Information kann beispielsweise den Öffnungswinkel φ oder eine daraus abgeleitete Größe betreffen. Ein anderer Parameter kann ebenfalls bestimmt werden, insbesondere ein Abtastparameter der Kamera 130, ein vorbestimmter, durch eine Bauart des Hausgeräts 105 festgelegter, oder ein mittels eines weiteren Sensors bestimmter Parameter.

In einem Schritt 215 kann die bestimmte Seitenkanal-Information berücksichtigt oder für die Erkennung des Objekts 115 berücksichtigt werden. In einer Variante wird hierzu das Kamerabild 135 bezüglich der bestimmten Seitenkanal-Information behandelt, etwa durch Freistellen, Entzerren oder Anpassen einer Belichtung oder Färbung. In einer weiteren Variante wird eine Zusatzinformation generiert, auf deren Basis eine nachfolgende Erkennung leichter durchgeführt werden kann. Beispielsweise kann eine Region of Interest bestimmt werden, in welcher das Objekt 115 vermutet wird und das für die Erkennung des Objekts 115 zu beachten ist. In noch einer weiteren Ausführungsform werden in Abhängigkeit der bestimmten Seitenkanal-Information eine von mehreren Vorverarbeitungen 155 und/oder eines von mehreren ML-Systemen 160 ausgewählt, um eine weitere Verarbeitung des Kamerabilds 135 durchzuführen. Mehrere der Varianten können miteinander kombiniert werden.

In einem Schritt 220 kann eine Vorverarbeitung des Kamerabilds 135 erfolgen. Diese Vorverarbeitung unterscheidet sich üblicherweise von der auf die Seitenkanal-Information bezogene Verarbeitung von Schritt 215 und auch von einer möglichen Vorverarbeitung, die Teil einer nachfolgenden ML-Erkennung ist. Dieser Schritt kann an einen nachfolgenden Erkennungsschritt eines ML-Systems 160 angepasst sein.

In einem Schritt 225 kann das Objekt 115 auf dem Kamerabild 135 erkannt werden, falls das Kamerabild 135 das Objekt 115 zumindest abschnittsweise abbildet. Eine Vorverarbeitung 155 kann einem ML-System 160 fest zugeordnet sein. Eine Vorverarbeitung 155 und ein ML-System 160 können miteinander integriert ausgeführt sein. Die Berücksichtigung der Seitenkanal-Information im Schritt 215 kann mit einer Vorverarbeitung 155 und/oder einem ML-System 160 integriert ausgeführt sein.

Beispielsweise kann das ML-System 160 dazu eingerichtet sein, das Objekt 115 mittels R-CNN (Region Based Convolutional Neural Network) auf dem Kamerabild 135 zu erkennen. Bei R-CNN werden üblicherweise mehrere Regionen des Kamerabilds 135 bestimmt, die dafür infrage kommen, das Objekt 115 darzustellen, bevor eine Objekterkennung mittels CNN erfolgt. Vorliegend können eine oder mehrere Regionen im Schritt 215 auf der Basis einer Seitenkanal-Information bestimmt werden, bevor die Erkennung mittels eines CNN erfolgt. Eine weitere Vorverarbeitung 155 kann dann entfallen.

Es kann auch ein anderes ML-System 160 verwendet werden, beispielsweise ein anderer regionsbasierter Ansatz wie Fast R-CNN, Faster R-CNN, Mask R-CNN oder Mesh R-CNN; oder auch ein Ansatz wie YOLO (You Only Look Once), SSD (Single Shot Multi-Box Detector) oder SIFT (Scale-Invariant Feature Transform).

Ein Hinweis auf das erkannte Objekt 115 kann in einem Schritt 230 bereitgestellt werden. Der Hinweis kann durch die Vorrichtung 110, das Hausgerät 105 oder eine externe Einrichtung ausgewertet werden. Der Hinweis kann auch an eine Person gerichtet und in einer für Menschen verständlichen Form bereitgestellt sein. Optional kann das Hausgerät 105 - oder ein anderes Hausgerät 105 - auf der Basis des erkannten Objekts 115 gesteuert werden.

### Bezugszeichen

- 100: System
- 105: Hausgerät
- 110: Vorrichtung
- 115: Objekt
- 120: Tür
- 125: Innenraum
- 130: Kamera
- 135: Kamerabild
- 140: Drehwinkelsensor
- 145: Verarbeitungseinrichtung
- 150: Komponente
- 155: Vorverarbeitung
- 160: ML-System
- 165: Ergebnis

- φ: Öffnungswinkel

- 200: Verfahren
- 205: Kamerabild abtasten
- 210: Seitenkanal-Information bestimmen
- 215: Seitenkanal-Information berücksichtigen
- 220: Kamerabild vorverarbeiten
- 225: Objekt auf Kamerabild erkennen
- 230: Hausgerät steuern

## Patentansprüche

1. Verfahren (200) zum Erkennen eines Objekts (115) im Bereich eines Hausgeräts (105), wobei das Verfahren (200) folgende Schritte umfasst:
- Abtasten (205) eines Kamerabilds (135), welches das Objekt (115) darstellt, vom Hausgerät (105) aus mittels einer Kamera (130) des Hausgeräts (105);
- Erfassen (210) einer Seitenkanal-Information, die einen Umstand betrifft, unter dem das Kamerabild (135) abgetastet wird, wobei es sich bei diesem Umstand um einen Kameraparameter der Kamera zum Zeitpunkt des Abtastens handelt; und
- Erkennen (225) des Objekts (115) mittels eines ML-Systems (160) auf der Basis des Kamerabilds (135) und der Seitenkanal-Information, wobei es sich beim ML-System um ein System des maschinellen Lernens handelt;
**dadurch gekennzeichnet, dass**
- mehrere ML-Systeme (160) zur Erkennung des Objekts (115) vorgesehen sind und eines davon auf der Basis der Seitenkanal-Information ausgewählt wird,
- wobei unterschiedliche Vorverarbeitungen (155) vorgesehen sind, von denen eine auf der Basis der Seitenkanal-Information ausgewählt wird, die das Kamerabild für das ausgewählte ML-System aufbereitet.

2. Verfahren (200) nach Anspruch 1, wobei die Seitenkanal-Information einen Ort und/oder eine Ausrichtung einer Kamera (130) betrifft, mittels der das Kamerabild (135) abgetastet wird.

3. Verfahren (200) nach einem der vorangehenden Ansprüche, wobei das ML-System (160) ein künstliches neuronales Netzwerk umfasst.

4. Verfahren (200) nach einem der vorangehenden Ansprüche, wobei auf der Basis der Seitenkanal-Information ein Abschnitt des Kamerabilds (135), der zur Erkennung des Objekts (115) irrelevant ist, verworfen wird.

5. Verfahren (200) nach einem der vorangehenden Ansprüche, wobei die Seitenkanal-Information eine Brennweite, eine Blende, eine Belichtungszeit und/oder eine Abtastempfindlichkeit der Kamera (130) zum Zeitpunkt des Abtastens umfasst.

6. Verfahren (200) nach einem der vorangehenden Ansprüche, wobei der Kameraparameter eine Bewegungsunschärfe des Kamerabilds (135) aufgrund einer relativen Bewegung der Kamera (130) gegenüber dem Objekt umfasst.

7. Vorrichtung (110) zur Erkennung eines Objekts (115) im Bereich eines Hausgeräts (105), wobei die Vorrichtung (110) folgende Elemente umfasst:
- eine am Hausgerät (105) angebrachte Kamera (130) zur Abtastung eines Kamerabilds (135), welches das Objekt (115) darstellt;
- eine Einrichtung (140) zur Erfassung einer Seitenkanal-Information, die einen Umstand betrifft, unter dem das Kamerabild (135) abgetastet wird, wobei es sich bei diesem Umstand um einen Kameraparameter der Kamera (130) zum Zeitpunkt des Abtastens handelt; und
- eine Verarbeitungseinrichtung (145) zur Erkennung des Objekts (115) mittels maschinellen Lernens auf der Basis des Kamerabilds (135) und der Seitenkanal-Information;
**dadurch gekennzeichnet, dass**
- mehrere ML-Systeme (160) und mehrere Vorverarbeitungen (155) vorgesehen sind, wobei es sich bei den ML-Systemen um Systeme des maschinellen Lernens handelt,
- wobei die Verarbeitungseinrichtung (145) dafür eingerichtet ist, ein ML-System (160) und eine Vorverarbeitung (155) auf der Basis der Seitenkanal-Information auszuwählen und auszuführen, wobei die ausgewählte Vorverarbeitung (155) das Kamerabild (135) für das ausgewählte ML-System (160) aufbereitet.

8. Hausgerät (105), umfassend eine Vorrichtung (110) nach Anspruch 7.

9. Hausgerät (105) nach Anspruch 8, wobei das Hausgerät (105) eine Tür (120) aufweist, an der die Kamera (130) angebracht ist, und die Kamera (130) dazu eingerichtet ist, das Kamerabild (135) bei geöffneter Tür (120) abzutasten.

## Claims

1. Method (200) for detecting an object (115) in the region of a household appliance (105), wherein the method (200) comprises the following steps:
- scanning (205) a camera image (135), which represents the object (115), from the household appliance (105) by means of a camera (130) of the household appliance (105);
- capturing (210) an item of side channel information, which relates to a circumstance under which the camera image (135) is scanned, wherein this circumstance involves a camera parameter of the camera at the point in time of the scanning; and
- detecting (225) the object (115) by means of an ML system (160) on the basis of the camera image (135) and the side channel information, wherein the ML system involves a machine learning system;
**characterised in that**
- multiple ML systems (160) for detecting the object (115) are provided, and one of these is selected on the basis of the side channel information,
- wherein different preprocessings (155) are provided, of which one is selected on the basis of the side channel information, which edits the camera image for the selected ML system.

2. Method (200) according to claim 1, wherein the side channel information relates to a location and/or an orientation of a camera (130), by means of which the camera image (135) is scanned.

3. Method (200) according to one of the preceding claims, wherein the ML system (160) comprises an artificial neural network.

4. Method (200) according to one of the preceding claims, wherein, on the basis of the side channel information, a section of the camera image (135) that is irrelevant for the detection of the object (115) is discarded.

5. Method (200) according to one of the preceding claims, wherein the side channel information comprises a focal distance, an aperture, an exposure time and/or a scanning sensitivity of the camera (130) at the point in time of the scanning.

6. Method (200) according to one of the preceding claims, wherein the camera parameter comprises a motion blur of the camera image (135) due to a relative movement of the camera (130) in relation to the object.

7. Apparatus (110) for detecting an object (115) in the region of a household appliance (105), wherein the apparatus (110) comprises the following elements:
- a camera (130) attached to the household appliance (105) for scanning a camera image (135), which represents the object (115);
- a facility (140) for capturing an item of side channel information, which relates to a circumstance under which the camera image (135) is scanned, wherein this circumstance involves a camera parameter of the camera (130) at the point in time of the scanning; and
- a processing facility (145) for detecting the object (115) by means of machine learning on the basis of the camera image (135) and the side channel information;
**characterised in that**
- multiple ML systems (160) and multiple preprocessings (155) are provided, wherein the ML systems involve machine learning systems,
- wherein the processing facility (145) is configured to select and carry out an ML system (160) and a preprocessing (155) on the basis of the side channel information, wherein the selected preprocessing (155) edits the camera image (135) for the selected ML system (160).

8. Household appliance (105), comprising an apparatus (110) according to claim 7.

9. Household appliance (105) according to claim 8, wherein the household appliance (105) has a door (120), to which the camera (130) is attached, and the camera (130) is configured to scan the camera image (135) when the door (120) is opened.

## Revendications

1. Procédé (200) pour la détection d'un objet (115) dans la zone d'un appareil ménager (105), dans lequel le procédé (200) comprend les étapes suivantes :
- balayage (205) d'une image de caméra (135) qui représente l'objet (115), à partir de l'appareil ménager (105), au moyen d'une caméra (130) de l'appareil ménager (105) ;
- acquisition (210) d'une information de canal latéral qui concerne une circonstance dans laquelle l'image de caméra (135) est balayée, dans lequel cette circonstance est un paramètre de caméra de la caméra à l'instant du balayage ; et
- détection (225) de l'objet (115) au moyen d'un système **ML** (160) sur la base de l'image de caméra (135) et de l'information de canal latéral, dans lequel le système ML est un système d'apprentissage automatique ;
**caractérisé en ce que**
- plusieurs systèmes ML (160) pour la détection de l'objet (115) sont prévus et l'un d'eux est sélectionné sur la base de l'information de canal latéral,
- dans lequel différents traitements préliminaires (155) sont prévus, dont l'un, qui traite l'image de caméra pour le système ML sélectionné, est sélectionné sur la base de l'information de canal latéral.

2. Procédé (200) selon la revendication 1, dans lequel l'information de canal latéral concerne un emplacement et/ou une orientation d'une caméra (130) au moyen de laquelle l'image de caméra (135) est balayée.

3. Procédé (200) selon l'une des revendications précédentes, dans lequel le système ML (160) comprend un réseau neuronal artificiel.

4. Procédé (200) selon l'une des revendications précédentes, dans lequel, sur la base de l'information de canal latéral, une section de l'image de caméra (135) non pertinente pour la détection de l'objet (115) est rejetée.

5. Procédé (200) selon l'une des revendications précédentes, dans lequel l'information de canal latéral comprend une distance focale, un obturateur, une durée d'exposition et/ou une sensibilité de balayage de la caméra (130) à l'instant du balayage.

6. Procédé (200) selon l'une des revendications précédentes, dans lequel le paramètre de caméra comprend un flou de mouvement de l'image de caméra (135) en raison d'un mouvement relatif de la caméra (130) par rapport à l'objet.

7. Dispositif (110) pour la détection d'un objet (115) dans la zone d'un appareil ménager (105), dans lequel le dispositif (110) comprend les éléments suivants :
- une caméra (130) fixée à l'appareil ménager (105) pour le balayage d'une image de caméra (135) qui représente l'objet (115) ;
- un dispositif (140) pour l'acquisition d'une information de canal latéral qui concerne une circonstance dans laquelle l'image de caméra (135) est balayée, dans lequel cette circonstance est un paramètre de caméra de la caméra (130) à l'instant du balayage ; et
- un dispositif de traitement (145) pour la détection de l'objet (115) au moyen d'un apprentissage automatique sur la base de l'image de caméra (135) et de l'information de canal latéral ;
**caractérisé en ce que**
- plusieurs systèmes ML (160) et plusieurs traitements préliminaires (155) sont prévus, dans lequel les systèmes ML sont des systèmes d'apprentissage automatique,
- dans lequel le dispositif de traitement (145) est aménagé pour sélectionner un système ML (160) et exécuter un traitement préliminaire (155) sur la base de l'information de canal latéral, dans lequel le traitement préliminaire sélectionné (155) traite l'image de caméra (135) pour le système ML sélectionné (160).

8. Appareil ménager (105) comprenant un dispositif (110) selon la revendication 7.

9. Appareil ménager (105) selon la revendication 8, dans lequel l'appareil ménager (105) présente une porte (120) sur laquelle la caméra (130) est fixée, et la caméra (130) est aménagée pour balayer l'image de caméra (135) lorsque la porte (120) est ouverte.
